# EUROPÄISCHE PATENTSCHRIFT

(11) **EP 1 165 357 B1**
(45) Veröffentlichungstag und Bekanntmachung des Hinweises auf die Patenterteilung: **05.03.2003**
(21) Anmeldenummer: 00908895.6
(22) Anmeldetag: 20.03.2000
(51) Int. Cl.: B62D 5/04, H02K 7/116

(54) **ELEKTRISCH UNTERSTÜTZTE LENKHILFE MIT KOMPAKTER STIRNRADGETRIEBEANORDNUNG**
ELECTRICALLY SUPPORTED STEERING BOOST WITH COMPACT SPUR GEAR ARRANGEMENT
DIRECTION A ASSISTANCE ELECTRIQUE COMPORTANT UNE UNITE D'ENTRAINEMENT A DENTURE DROITE COMPACTE

(30) Priorität: 30.03.1999 CH 60099
(43) Veröffentlichungstag der Anmeldung: 02.01.2002
(73) Patentinhaber: ThyssenKrupp Presta AG, 9492 Eschen (LI)
(72) Erfinder: BATTLOGG, Stefan, A-6771 St. Anton im Montafon (AT)
(74) Vertreter: Wegmann, Urs
(86) Internationale Anmeldenummer: CH0000158
(87) Internationale Veröffentlichungsnummer: WO00059766

(56) Entgegenhaltungen:
- EP-A- 0 124 790
- WO-A-98/12097
- US-A- 5 691 584

## Beschreibung

Die Erfindung bezieht sich auf eine Lenkhilfenanordnung für Kraftfahrzeuge mit einer Lenkwelle mit koaxial dazu angeordnetem elektrischen Scheibenläufermotor und einem auf die Lenkwelle wirkenden Untersetzungsgetriebe.

Aus der EP 0 124 790 ist eine Lenkhilfe bekannt geworden mit elektrischem Antrieb, welche koaxial in die Lenkwelle eingebaut ist. Die Servokrafteinkopplung erfolgt mit Hilfe eines Servomotores, der über ein Planetengetriebe auf die Lenkwelle einwirkt. Das Getriebe und der Motor ist koaxial gegenüber der Lenkwelle angeordnet, wobei die Lenkwelle zentrisch durch die Anordnung hindurchgeführt wird. Da der Motor und das Getriebe als separate, zusammengebaute Einheit ausgebildet ist, wird die Anordnung voluminös und besteht aus einer grossen Anzahl Teilen, welches nachteilig ist in Bezug auf Wirtschaftlichkeit und Zuverlässigkeit. Ein besonderer Nachteil besteht darin, dass das Sonnenrad des Planetengetriebes am Rotor des Motorantriebes befestigt ist, wobei der Rotor und das Sonnenrad koaxial zur Wellenachse drehbar angeordnet und gelagert ist. Daraus ist ersichtlich, dass das Sonnenrad bei dieser Ausführung immer einen relativ grossen Durchmesser aufweisen wird, zumindest aber nie einen kleineren Durchmesser aufweisen kann als die Lenkwelle selber. Da das Untersetzungsverhältnis eines Planetengetriebes im ersten Schritt vom Verhältnis der Durchmesser des Sonnenrades und der Planetenräder bestimmt wird, ist leicht ersichtlich, dass bei dieser Ausführung keine grossen Durchmesserverhältnisse der Räder erreicht werden können, da das Sonnenrad selbst bei dieser Bauweise immer einen relativ grossen Durchmesser aufweist. In der Beschreibung der vorerwähnten Anmeldung wird denn auch ein Untersetzungsverhältnis von 1:1 bis 1:10 angegeben. Grössere Untersetzungsverhältnisse wären bei der vorliegenden Ausführungsform nur möglich, wenn der gesamte Getriebedurchmesser drastisch erhöht würde, was zu unzulässigen Dimensionen der Lenkhilfeanordnung führen würde.

Kleine Getriebeuntersetzungsverhältnisse haben ausserdem den Nachteil, dass die Motorleistung entsprechend gross sein muss und im weiteren nur langsam drehende Motoren, welche entsprechenden Aufwand bedingen, eingesetzt werden können. Ein weiterer Nachteil ist hierbei das weniger rasche Ansprechverhalten, welches im System zu Reaktionsträgheiten führt.

Eine weitere bekannte Ausführungsform besteht darin, als Untersetzungsgetriebe Schneckengetriebeanordnungen zu verwenden. Hierbei sind aber wegen der schlechten Gesamtwirkungsgrade grosse Antriebsleistungen erforderlich, welche wiederum zu grossen Gesamtbauweisen der Servoeinheit führen und eine wirtschaftliche Ausführung begrenzen. Auch die beim Schneckengetriebe um 90° versetzten Drehachsen behindern eine kompakte Anordnung.

Durch die voluminöse Bauweise steht vorallem auch in Richtung der Wellenachse weniger Bauraum zu Verfügung, was vorallem nachteilig auf die Sicherheitsfunktionen ist. Bei einem Aufprall des Lenkers auf das Steuerrad muss die Energie möglichst vorteilhaft aufgenommen werden, um den Fahrzeuglenker nicht zu verletzen. Dies wird dadurch erreicht, dass die Lenkspindel in so einem Fall durch teleskopartiges Ineinanderschieben energieverzehrend nachgeben soll. Daraus entsteht die Forderung, möglichst lange Schiebewege für die Energieabsorptionsvorrichtung zur Verfügung stellen zu können, was mit den bekannten Servoantrieben gemäss Stand der Technik nicht ohne weiteres möglich ist. Der benötigte grosse Einbauraum in axialer Richtung geht somit auf Kosten des gewünschten Energieabsorptionsverschiebeweges im Aufprallfall.

Ein weiterer Nachteil besteht bei bekannten Vorrichtungen darin, dass diese durch den komplizierten Aufbau neben mechanischem Spiel auch wegen grossen, zu bewegenden Massen eine gewisse Reaktionsträgheit aufweisen, was sich negativ auf das Lenkverhalten und die Wirtschaftlichkeit auswirkt. Die Reaktionsträgheit führt beispielsweise zu grösseren Ansprechzeiten der Lenkung, was zum Beispiel bei schnellen Ausweichmanövern nachteilig ist. Aufwendige Bauweisen entsprechend den bekannten Anordnungen verzehren ausserdem in unvorteilhafter Weise viel Energie im Betrieb. Neben den Aufwendungen für die Zurverfügungstellung der notwendigen Energie sind auch zusätzliche Aufwendungen notwendig, um die entsprechenden Wärmeverluste abzuführen.

Ein weitere Nachteil bekannter Anordnung besteht darin, dass der Ausgleich von Spielen in Antriebsteilen aufwendig ist oder nur bedingt möglich ist. Dies führt zu einem weniger präzisen Lenkverhalten und zu erhöhten Reaktionszeiten, verbunden mit einem weniger guten Lenkgefühl des Fahrzeuglenkers.

Die Aufgabe der vorliegenden Erfindung liegt darin, die Nachteile des vorerwähnten Standes der Technik zu beseitigen. Insbesondere besteht die Aufgabe darin, eine elektrische Lenkhilfe für eine Lenkanordnung zu realisieren, welche äusserst kompakt aufgebaut ist und welche es erlaubt, ein rasches Ansprechverhalten mit einer guten Dynamik mit ansprechendem Lenkverhalten für den Lenker zu erzielen, welche bei hohem Wirkungsgrad arbeitet und wirtschaftlich herstellbar ist.

Die Aufgabe wird erfindungsgemäss durch die Anordnung nach den Merkmalen des Anspruchs 1 gelöst. Die abhängigen Ansprüche definieren weitere vorteilhafte Ausführungsformen.

Die Aufgabe wird erfindungsgemäss dadurch gelöst, dass ein scheibenförmiger Elektromotor mit einem Stirnradgetriebe kombiniert wird, wobei der Motor koaxial in die Welle einer Lenkspindel, einer Lenkwelle oder einem Lenkgetriebezapfen eingebaut ist und das Stirnrad exzentrisch zur Welle an diese ankoppelnd angeordnet ist.

Der Rotor, welcher um die Welle drehbar und gelagert angeordnet ist, treibt einen ebenfalls um die Welle koaxial drehendes, rohrstückförmiges Zahnrad, welches als Ritzel ausgebildet ist, an. Dieses Ritzel bildet zusammen mit einem exzentrisch angeordneten Stirnrad grösseren Durchmessers, welches mit diesem in Eingriff steht, eine erste Stufe eines Stirnraduntersetzungsgetriebes. Dieses Stirnrad ist gleichdrehend mit einem weiteren Zahnrad versehen, welches auf einen Zahnkranz eines weiteren Zahnrades wirkt, welches verbunden ist mit der Lenkwelle und somit die Motorkraft übersetzt bzw. drehzaluntersetzt auf die Lenkwelle wirkt. Die Lenkwelle ist nicht unterbrochen und führt mit ihrer Achse durch die Anordnung hindurch. Die Getriebeanordnung kann einstufig oder mehrstufig ausgebildet sein. Die notwendige Getriebeuntersetzung wird in bekannter Weise durch die Verhältnisse der in Eingriff stehenden Zahnanzahlen der Zahnradpaare definiert bzw. durch ihre Durchmesserverhältnisse und durch die Stufenzahl der Getriebeanordnung.

Der Stator des Scheibenläufermotors sowie die Getriebeanordnung sind an einer Trägerplatte fixiert, bzw. die Zahnräder drehbeweglich gelagert. Die Trägerplatte ist im wesentlichen quer zur Lenkwellenachse und parallel zur Rotorscheibenebene angeordnet, wobei die Trägerplatte auch Gehäuseteile aufnimmt, welche die Motor- und die Getriebeanordnung abdecken und schützen. Die Trägerplatte bzw. auf ihr angeordnete Gehäuseabdeckungen weisen Befestigungsmittel, beispielsweise einen Befestigungsflansch, auf, um die Trägerplatte mit dem Motorstator und Getriebeelementen ortsfest am Fahrzeugchassis zu halten, vorzugsweise mit dazwischen angeordneten Gummilagern. Die Lenkwelle selbst, welche durch die Anordnung hindurch führt, ist vorzugsweise beidseitig im Bereich des Ein- und Austrittes gegenüber Gehäuseteilen bzw. der Trägerplatte gelagert. Als Lager dienen hierzu vorzugsweise reibungsarme, rollende Lager wie Kugellager.

Bevorzugt werden als Motorantrieb elektronisch kommutierte Scheibenläufermotoren eingesetzt, welche eine Statorwicklung aufweisen, die ortfest angeordnet ist, wobei zwischen den Statorwicklungen eine rotierende Scheibe als Rotor vorgesehen ist, welche flache Permanentmagnete enthält. Um hohe Momente erzeugen zu können, werden vorteilhafterweise kräftige Permanentmagnete verwendet, welche magnetische Energieinhalte aufweisen von mehr als 6000 Gauss, wie beispielsweise seltenerdenthaltende Magnetmaterialien, wie beispielsweise Cobalt-Samarium-Material und insbesondere Neodym-Magnetmaterialien. Der Motor wird über eine Leistungselektronik mit Regelanordnung angesteuert, welche über eine Drehmomentmessung an der Lenkradseite der Lenkwelle das vom Fahrzeuglenker eingekoppelte Lenkdrehmoment misst und über den Regler die Motor-Getriebe-Einheit so ansteuert, dass die Lenkkraft entsprechend verstärkt wird. Die Drehmomentmessung erfolgt lenkradseitig vor der Servoeinheit, beispielsweise mit Dehnungsmessstreifen (DMS) oder vorzugsweise über die Verformungsmessung eines in die Lenkwelle eingebauten Torsionsstabes.

Die Servoanordnung sollte in der Lage sein, Drehmomente an die Welle abgeben zu können, welche > 50 Nm sind, vorzugsweise bis 100 Nm. Der Lenker sollte hierbei nicht mehr als maximal 10 Nm aufbringen müssen, wobei vorzugsweise nicht mehr als 6 Nm gewünscht sind, um ein leichtgängiges Steuern zu ermöglichen. Ausserdem sollte der Drehmomentsensor bei einer Drehung < 1°, vorzugsweise < 0,5°, bereits ansprechen, um ein präzises Steuern zu gewährleisten. Die erwähnten Drehmomentwerte können mit der vorteilhaften, erfinderischen Kombination eines Scheibenläufermotors mit dem entsprechenden Stirnradgetriebe erreicht werden. Durch die bereits erwähnten Freiheitsgrade in der Motordimensionierung und der Getriebedimensionierung über die Anzahl Stufen und Untersetzungsverhältnisse pro Stufe können die entsprechenden Drehmomente erreicht werden. Hierbei ist besonders die kompakte Bauform der Anordnung zu berücksichtigen und ausserdem sollte die Anordnung nicht zu viel elektrische Speiseleistung beanspruchen. Hohe Motorleistung würde neben der Baugrösse auch den Kühlaufwand erhöhen und einen grösseren Aufwand bei der Steuerelektronik bedingen. Dies würde ausserdem stärkere Lichtmaschinen, grössere Batterien und dickere Stromleitungen erforderlich machen. Die Wirtschaftlichkeit wäre dann nicht mehr gegeben. Mit der erfindungsgemässen Anordnung können Drehmomente von mindestens 50 Nm, ja sogar über 65 Nm, ohne weiteres bei maximal eingespiesenen Motorströmen von 75 A und einer Spannung von 12 V erreicht werden. Bei entsprechender Gesamtoptimierung der Motor-Getriebeanordnung bezüglich Wirkungsgrad sind bis zu 75 Nm erreichbar bei der erwähnten Motorspeisung. Hierbei sind Abmessungen der Motor-Getriebe-Servo-Anordnung möglich im Bereich von maximal 100 mm in der Dicke, in der Höhe maximal 300 mm und in der Breite maximal 200 mm. Mit einem typischen Ausführungsbeispiel bei welchem ein zweistufiges Getriebe, wie in den Figuren dargestellt, verwendet worden ist, konnte eine maximale Dicke von 84 mm erreicht werden bei einer Höhe von maximal 246 mm und einer Breite von maximal 173 mm. Die zweistufige Anordnung entsprechend diesem Beispiel ist deshalb eine besonders geeignete Ausführungsform für die vorliegende Anwendung. Bei diesem Ausführungsbeispiel wurde ein Gesamtwirkungsgrad von Motor und Getriebe von über 80% erreicht bei 80 Nm abgegebenem Drehmoment.

Bei der vorliegenden Ausführungsform können Gesamtmotor-Getriebewirkungsgrade von besser 75 % ohne weiteres erreicht werden. Es ist sogar möglich Werte über 85 % zu erzielen, was für eine ökonomische Betriebsweise besonders günstig ist. Um die Laufruhe und das Zahnradspiel zu optimieren, wird ausserdem vorgeschlagen, die im Eingriff stehenden Zahnräder schräg verzahnt auszuführen. Besonders hohe Laufruhe wird erreicht, wenn alle im Eingriff stehenden Zahnradpaare schräg verzahnt ausgeführt werden. Die vorliegende Bauform mit dem Stirnradgetriebe ermöglicht ausserdem, dass Mittel vorgesehen werden, welche eine Einstellung des Zahnradspieles optimal ermöglichen. Um wie erwähnt ein gutes Lenkverhalten zu erreichen, ist ein möglichst spielfreier Servoantrieb wichtig. Dies kann aber im Widerspruch zu einem hohen Getriebewirkungsgrad stehen, wenn die Spielfreiheit zu erhöhten Reibwerten führt. Die Einstellung des Zahnradspieles ermöglicht somit einerseits das Minimieren des Zahnradspieles und andereseits das Maximieren des Getriebewirkungsgrades. Bei den vorerwähnten Werten und bei der zweistufigen Ausbildungsform haben sich für die Getriebeanordnung Untersetzungsverhältnisse von 20 bis 30 besonders bewährt.

Die ganze Anordnung wird beim Betätigen der Lenkwelle so über Sensorelemente, Auswertelektronik und Leistungselektronik betrieben, dass entsprechend der Betätigung der Lenkwelle durch den Lenker eine Krafteinkopplung auf die Lenkwelle erfolgt und somit eine leichtgängige Lenkung möglich ist. Die Anordnung führt zu einer sehr kompakten Bauweise, welche hohe Wirkungsgrade zulässt und ausserdem mit wenig Aufwand gut gekühlt werden kann. Das geforderte ergonomische Lenkverhalten kann realisiert werden und durch die kompakte Ausführungsform, insbesondere mit der geringen axialen Baulänge, können für den Crashfall die notwendigen Absorptionselemente optimal realisiert und eingebaut werden.

Die Erfindung wird nun nachfolgend beispielsweise mit schematischen Figuren näher erläutert. Es zeigen:
- Fig. 1: schematisch und im Querschnitt eine erfindungsgemässe Lenkhilfenanordnung
- Fig. 2: schematisch, in dreidimensionaler Darstellung eine Trägerplatte, auf welche die Motor-Getriebe-Anordnung aufgebaut wird
- Fig. 3: ein Querschnitt, der in der Fig. 2 dargestellten Trägerplatte

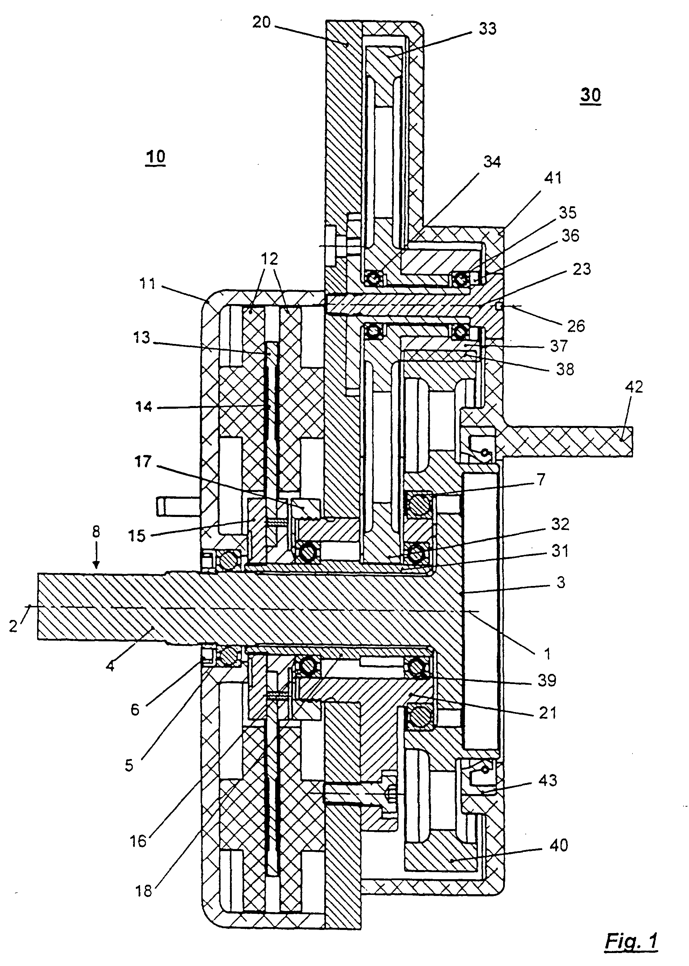

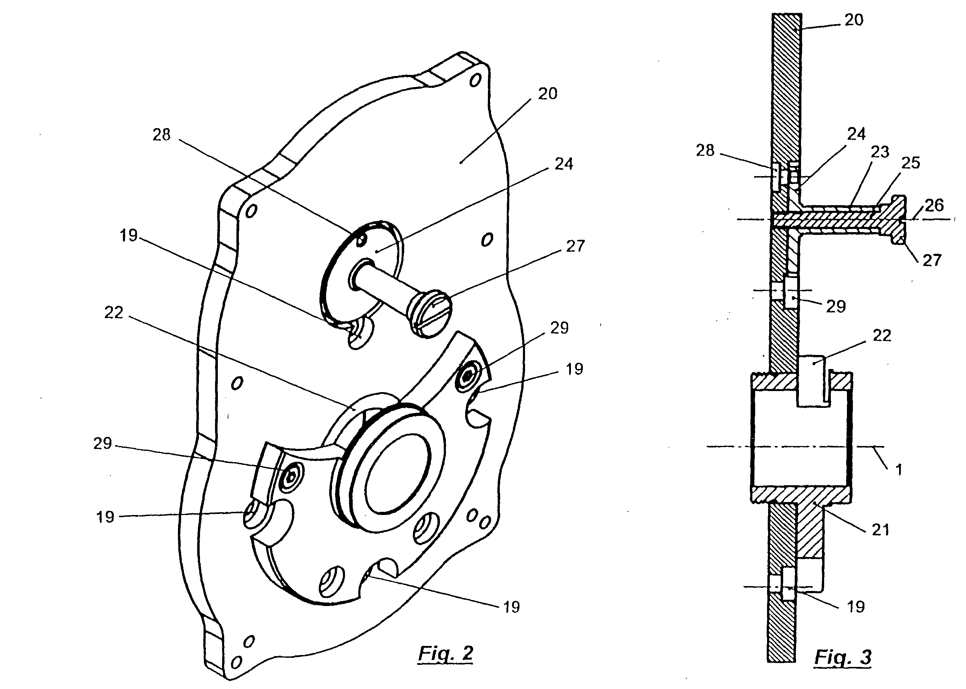

Figur 1 zeigt eine erfindungsgemässe Lenkhilfenanordnung im Querschnitt mit einem bevorzugten zweistufigen Stirnradgetriebe 30. Eine Lenkwelle 4 drehbar um die Lenkwellenachse 1 tritt durch die Lenkhilfenanordnung 10, 30 hindurch und ist dieser gegenüber mit rollenden Lagern, vorzugsweise Kugellagern 5, 7 gelagert. Auf der linken Seite der Figur ist die Lenkradseite 2 und auf der rechten Seite die Radseite 3 der Welle 4 dargestellt. Der Motor 10 ist mit Vorteil auf der Lenkradseite 2 positioniert, wo hingegen das Getriebe 30 auf der Radseite 3 der Welle vorgesehen ist. Im Bereich der Lenkradseite 2 sind auch Mittel 8 vorgesehen zur Aufnahme des Drehmomentes, welches vom Lenker an die Lenkwelle 4 abgegeben wird beim Lenkvorgang. Diese Drehmomentmessmittel 8 erzeugen ein entsprechendes Signal, welches zur Weiterverarbeitung an eine Regelelektronik abgegeben wird, um den Motor 10 entsprechend anzusteuern. Zur Messung des Drehmomentes können beispielsweise Dehnungsmessstreifen verwendet werden. Eine besonders geeignete Erfassung des Drehmomentes erfolgt durch Einbau eines Torsionsstabes in der Welle 4 unter Messung der entsprechend dem Drehmoment zugeordneten Torsion. Der Scheibenläuferelektromotor 10 ist als elektronisch kommutierter Motor ausgebildet, der koaxial um die Lenkwelle 4 angeordnet ist. Die Rotorscheibe 13 dreht koaxial um die Welle 4 und wird angetrieben durch die symmetrisch und beidseitig zur Rotorscheibe 13 angeordneten Statorwicklungen 12. Die Rotorscheibe 13 besteht beispielsweise aus einem faserverstärkten Kunststoff und enthält Ausfräsungen, welche die Permanentmagnete 14 aufnehmen. Die Ausfräsungen für die Permanentmagnete 14 können wechselseitig in der Rotorscheibe 13 erfolgen und sind dann nicht durchgehend, womit eine einfache Fixierung und Positionierung der Magnete gewährleistet ist. Die Verwendung von Kunststoff hat den Vorteil, dass die Scheibe 13 sehr leicht wird und kostengünstig herstellbar ist. Besonders einfach herstellbar ist die Scheibe 13, wenn sie als Spritzgussteil ausgeführt ist. Bei besonders hohen Anforderungen an geringen Planschlag der Rotorscheibe 13 wird diese bevorzugt aus Metall, insbesondere rostfreiem Stahl (INOX) mit möglichst geringer Magnetisierbarkeit, hergestellt. Sowohl der Motor 10, wie auch das Getriebe 30 ist gegenüber einer ortsfesten Trägerplatte 20 definiert und fixiert. Die Trägerplatte 20 weist hierbei eine Durchtrittsöffnung für die Welle 4 auf und ist in einer Parallelebene zur drehenden Rotorscheibe 13 angeordnet, also quer zur Welle 4. Motorseitig nimmt die Trägerplatte 20 beispielsweise einen Motorgehäusedeckel 11 auf, welcher die Motoranordnung schützend abdeckt und gleichzeitig als Träger für ein Lenkwellenlager 5 ausgebildet ist, welches über eine Sicherung 6 fixiert ist. Die Durchtrittsöffnung 22 in der Trägerplatte 20 ist beispielsweise rohrstutzenförmig ausgebildet und übernimmt die Funktion eines Lagerhalteblocks 21 für die Aufnahme der Ritzelhohlwellenlager 39, 16. Das Ritzelhohlwellenstück 31 ist als kurzes Rohrstück ausgebildet und ist koaxial zur Welle 4 gegenüber der Trägerplatte 20 bzw. dem Lagerhalteblock 21 mit den Lagern 39, 16 drehbar um die Lenkwellenachse 1 gelagert. Am einen Ende des Ritzelhohlwellenstückes 31 ist die Rotorscheibe 13 über die Rotorbefestigung 15 befestigt, so dass die Rotorscheibe 13 das Drehmoment des Motors 10 an den Ritzel 31 überträgt. Das andere Ende des Ritzel 31 ist als Zahnradritzel ausgebildet und steht im Eingriff mit einem ersten Stirnrad 33, welches entsprechend dem gewünschten Untersetzungsverhältnis gegenüber dem Ritzel einen grösseren Durchmesser aufweist. Das Stirnrad 33 ist an einer an der Trägerplatte 20 fixierten Stirnradachse 23 mit den Lagern 34, 35 drehbar gelagert. Lager sind beispielsweise in bekannterweise mit Sicherungen 36, 6, 17 gesichert. Ein weiteres Zahnrad 37, welches gegenüber dem ersten Stirnrad 33 einen kleineren Durchmesser aufweist, ist als Ritzel 37 ausgebildet und direkt mit dem ersten Stirnrad 33 verbunden und dreht um dieselbe Achse. Dieses zweite Ritzel 37 steht über den Verzahnungseingriff 38 mit einem zweiten Stirnrad 40 im Eingriff, welches gegenüber dem Ritzel einen grösseren Durchmesser aufweist und direkt mit der Welle 4 verbunden ist. Um günstige Abmessungen der Anordnung erreichen zu können bei den geforderten Drehmomenten und geringer elektrischer Speiseleistung des Motors 10, sind die Zahnraddurchmesser so zu dimensionieren, dass die Gesamtuntersetzung des zweistufigen Stirnradgetriebes im Bereich von 20 bis 30 liegt. Günstig ist hierbei, wenn die beiden Stufen in etwa die gleichen Untersetzungen aufweisen, beispielsweise etwa je 5-fach, das heisst total 25-fach. Beispielsweise wurde mit dieser Ausführung bei 12 V Speisespannung und 75 A Speisestrom ein Drehmoment von 65 Nm und bei 100 A ein Drehmoment von 80 Nm an die Welle 4 abgegeben. Ein besonders ruhiger und präziser Lauf ist gewährleistet, wenn die Verzahnung des Getriebes schräg ausgeführt ist. Damit der Ritzel 31 der ersten Stufe 31, 33 in das erste, exzentrisch zur Wellenachse 1 gelagerte Stirnrad 33 eingreiffen kann, wird im rohrstückförmigen Lagerhalteblock 21 seitlich dort, wo das erste Stirnrad 33 hindurchtreten muss, eine seitliche, schlitzförmige Durchtrittsöffnung 22 für das Zahnrad 33 vorgeshen. Das Getriebe 30 wird mit Vorteil durch einen Getriebegehäusedeckel 41 abgedeckt und somit geschützt, wobei dieser Deckel an der Trägerplate 20 fixiert ist und gleichzeitig beispielsweise einen Befestigungsflansch 42 für die Montage am Fahrzeugchassis aufnimmt. Auf der Radseite 3 der Welle 4 im Bereich des dort angebrachten, zweiten Stirnzahnrades 40 wird mit Vorteil eine Wellendichtung 43 vorgesehen, um das Eindringen von Schmutz zu vermeiden.

Das Getriebe 30 der Lenkhilfenanordnung sollte so wenig Spiel wie möglich aufweisen, um ein gutes Lenkverhalten zu gewährleisten. Gleichzeitig muss sichergestellt werden, dass der Getriebewirkungsgrad möglichst hoch ist, um mit geringen Motorleistungen bei kleinen Gesamtbauformen auskommen zu können und ausserdem die Kosten für das System, inklusive der Ansteuerelektronik, tief halten zu können. Zu diesem Zweck ist es vorteilhaft, eine Einstellanordnung für das Zahnradspiel vorzusehen, insbesondere im Bereich des ersten Stirnrades 33 mit dem zweiten Ritzel 37. Mit einer solchen Vorrichtung können die Spiele der beiden Zahnradeingriffe 32, 38 der Zahnradpaare optimal eingestellt werden. Hierfür wird beispielsweise die Drehachse des ersten Stirnrades 33 mit zweitem Ritzel 37 mit einer Exzenterdrehachse 23, 24, 25, 26a, 27 versehen, welche durch Drehen einstellbar ist. Dies kann beispielsweise mit einem Befestigungs- und Stellbolzen 27, welcher innerhalb einer exzentrischen Bohrung 25 drehbar angeordnet ist, vorgenommen werden. Die Exzenterscheibe 24, welche die die exzentrische Bohrung aufnimmt, liegt wiederum an der Trägerplatte 20 an und kann dort beipspielsweise mit einer Klemmschraube 28 in der gewählten Position fixiert werden. Durch Drehen des Stellbolzens 27 wird der radiale Achsabstand der Lenkwellenachse 1 und der Drehachse 26 variiert. Diese Details sind genauer ersichtlich aus der Schnittdarstellung der Trägerplatte 20 in Figur 3 und der dreidimensionalen Darstellung der Trägerplatte 20 gemäss Figur 2. Weiterhin ersichtlich in diesen Darstellungen sind die Befestigungsbohrungen 19, an welchen der Stator 12 des Scheibenläufermotors 10 fixiert ist. Des weiteren ist der rohrstückförmige Lagerhalteblock 21, welcher die Lenkwellenachse 1 umschliesst, dargestellt, wobei in dieser bevorzugten Ausführung der Lagerhalteblock 21 als separates Element, welches an der Trägerplatte 20 mit Lagerblockbefestigungsmitteln 29 ist, dargestellt. Die Durchtrittsöffnung 22 für das erste Stirnzahnrad 33 ist im Lagerhalteblock 21 als schlitzförmige Durchtrittsöffnung ausgebildet. Wenn die Getriebeanordnung 30 ein dichtes Gehäuse 20, 41 aufweist und die Welle 4 beidseitig beim Ein- und Austritt durch das Gehäuse mit Wellendichtringen 43 versehen wird, kann das Getriebe eine Flüssigkeit wie insbesondere ein Schmieröl aufnehmen. Dadurch wird eine vorteilhafte Dämpfung erzielt und die Geräuschentwicklung stark verringert. Ausserdem wird die Reibung weiter verringert und damit der Wirkungsgrad zusätzlich erhöht.

## Patentansprüche

1. Lenkhilfenanordnung für Kraftfahrzeuge mit einer um eine Lenkwellenachse (1) drehbaren Lenkwelle (4) mit koaxial dazu angeordnetem, elektrischem Scheibenläufermotor (10) und mit einem exzentrisch zur Achse (1) angeordnetem Stirnradgetriebe (30), wobei der Motor (10) mit seiner Rotorscheibe (13) mit einem ersten Zahnradritzel (31) des Getriebes (30) verbunden ist und dieser koaxial drehbar um die Welle (4) gelagert (16, 39) ist und dieser über ein erstes Stirnzähnrad (33) und die weiteren Zahnradstufen (37, 40) drehzaluntersetzend mit der Welle (4) wirkverbunden ist.

2. Anordnung nach Anspruch 1 **dadurch gekennzeichnet, dass** das Stirnradgetriebe (30) mehrstufig, insbesondere zweistufig ausgebildet ist.

3. Anordnung nach Anspruch 1 oder 2 **dadurch gekennzeichnet, dass** die Getriebezahnräder (31, 33, 37, 40), welche paarweise im Eingriff stehen, in Parallelebenen zur Rotorebene angeordnet sind.

4. Anordnung nach einem der vorhergehenden Ansprüche **dadurch gekennzeichnet, dass** mindestens ein im Eingriff stehendes Zahnradpaar (31, 33) (37, 40) schrägverzahnt ist, vorzugsweise alle schrägverzahnt sind.

5. Anordnung nach einem der vorhergehenden Ansprüche **dadurch gekennzeichnet, dass** der Motor-Getriebewirkungsgrad 75%, vorzugsweise . 85% ist.

6. Anordnung nach Anspruch 2 **dadurch gekennzeichnet, dass** die Anordnung bei einer Motorspeisung von 75 A im 12 V-Betrieb ein Drehmoment von ≥ 50 Nm, vorzugsweise ≥ 65 Nm, vorzugsweise bis 75 Nm, an die Welle (4) abgibt.

7. Anordnung nach einem der vorhergehenden Ansprüche **dadurch gekennzeichnet, dass** die drehbeweglichen Teile wie die Welle (4), der Rotor (13), die Getriebezahnräder (31, 33, 37, 40) mit rollenden Lagern gelagert sind.

8. Anordnung nach einem der vorhergehenden Ansprüche **dadurch gekennzeichnet, dass** zwischen Motor (10) und Getriebe (30) eine Trägerplatte (20) angeordnet ist, welche eine Öffnung aufweist, durch welche die Welle (4) mit dem Ritzel (31) hindurch geführt ist, wobei die Trägerplatte Mittel (41, 42) aufweist zur Befestigung am Fahrzeugchassis.

9. Anordnung nach Anspruch 8 **dadurch gekennzeichnet, dass** die Wellendurchtrittsöffnung der Trägerplatte (20) als rohrstückförmiger Lagerhalteblock (21) ausgebildet ist zur Aufnahme der Lager (16, 39) für den ersten Zahnradritzel (31).

10. Anordnung nach Anspruch 9 **dadurch gekennzeichnet, dass** der rohrstückförmige Lagerhalteblock (21) eine seitliche Durchtrittsöffnung (22) für ein erstes Stirnrad (33) aufweist, welches in den ersten Ritzel (31) eingreifft.

11. Anordnung nach einem der vorhergehenden Ansprüche **dadurch gekennzeichnet, dass** Mittel vorgesehen sind zur elektronischen Kommutierung des Motors (10) und dass der scheibenförmige Rotor (13) Permanentmagnete (14) aufnimmt, vorzugsweise vom Typ mit seltenen Erd-Materialien wie Cobalt-Samarium, insbesondere Neodym.

12. Anordnung nach einem der vorhergehenden Anpsrüche **dadurch gekennzeichnet, dass** die Anordnung einen elektronischen Regler enthält zur Ansteuerung des Motors (10).

13. Anordnung nach Anspruch 12 **dadurch gekennzeichnet, dass** Mittel zur Drehmomentmessung auf der Lenkradseite (2) an der Welle (4) vorgesehen sind wie DMS, vorzugsweise eine Torsionsstabanordnung integriert in der Welle (4).

14. Anordnung nach Anspruch 13 **dadurch gekennzeichnet, dass** der elektronische Regler mit den Mitteln zur Lenk-Drehmomentmessung verbunden ist.

15. Anordnung nach einem der vorhergehenden Ansprüche **dadurch gekennzeichnet, dass** die Getriebeanordnung (30) mit einem dichtenden Gehäuse (20, 41) umgeben ist und vorzugsweise eine Flüssigkeit, insbesondere Öl, aufnehmen kann.

## Claims

1. Steering aid device for motor vehicles with a steering shaft (4) rotatable about a steering shaft axis (1) and arranged coaxial to this an electric disc armature motor (10) and with a spur gear (30) arranged eccentric to the axis (1), where the motor (10) with its armature disc (13) is connected with a first pinion (31) of the gear (30), which pinion is mounted (16, 39) rotatable coaxially about the shaft (4) and actively connected with the shaft (4), lowering the rotation speed, via a first spur gearwheel (33) and further gear stages (37, 40).

2. Arrangement according to claim 1, **characterised in that** the spur gear (30) is formed in several stages, in particular two stages.

3. Arrangement to claim 1 or 2, **characterised in that** the gearwheels (31, 33, 37, 40) which intermesh in pairs are arranged in parallel planes to the armature plane.

4. Arrangement according to any of the preceding claims, **characterised in that** at least one intermeshing gear pair (31, 33) (37, 40) is a helical gear, preferably all are helical gears.

5. Arrangement according to any of the preceding claims, **characterised in that** the motor-gear efficiency is 75%, preferably 85%.

6. Arrangement according to claim 2, **characterised in that** with a motor supply of 75 A in 12 V operation, the arrangement emits to the shaft (4) a torque of ≥ 50 Nm, preferably ≥ 65 Nm, preferably up to 75 Nm.

7. Arrangement according to any of the preceding claims, **characterised in that** the rotationally mobile parts such as the shaft (4), armature (13), gearwheels (31, 33, 37,40) are mounted with roller bearings.

8. Arrangement according to any of the preceding claims, **characterised in that** between the motor (10) and the gearbox (30) is arranged a carrier plate (20) with an opening through which passes the shaft (4) with the pinion (31), where the carrier plate has means (41, 42) for attachment to the vehicle chassis.

9. Arrangement according to claim 8, **characterised in that** the shaft passage opening of the carrier plate (20) is formed as a tubular bearing mount block (21) to hold the bearing (16, 39) for the first pinion (31).

10. Arrangement according to claim 9, **characterised in that** the tubular bearing mount block (21) has a side passage opening (22) for a first spur gearwheel (33) which engages in the first pinion (31).

11. Arrangement according to any of the preceding claims, **characterised in that** means are provided for electronic commutation of the motor (10) and that the disc-like armature (13) holds permanent magnets (14), preferably of the type with rare earth materials such as cobalt-samarium, in particular neodymium.

12. Arrangement according to any of the preceding claims, **characterised in that** the arrangement contains an electronic regulator to control the motor (10).

13. Arrangement according to claim 12, **characterised in that** means are provided on the shaft (4) for measuring the torque on the steering wheel side (2) such as DMS, preferably a torsion rod arrangement integrated into the shaft (4).

14. Arrangement according to claim 13, **characterised in that** the electronic regulator is connected with the means for measuring the steering torque.

15. Arrangement according to any of the preceding claims, **characterised in that** the gear arrangement (30) is surrounded by a sealed housing (20, 41) and can preferably hold a fluid, in particular oil.

## Revendications

1. Dispositif de direction assistée pour véhicules qui inclut un axe de direction (4) qui peut tourner autour d'un axe géométrique (1) d'axe de direction, un moteur électrique (10) à entrefer plat agencé coaxialement avec cet axe et un réducteur (30) à engrenages droits agencé de façon excentrique par rapport à l'axe géométrique (1), dans lequel le moteur (10) est connecté par son disque de rotor (13) à un premier pignon denté (31) du réducteur (30) et celui-ci est logé (16, 39) à rotation coaxialement autour de l'arbre (4) et celui-ci est relié fonctionnellement à l'arbre (4) au moyen d'un premier engrenage droit (33) et les autres rapports d'engrenages (37, 40) sont reliés à l'arbre avec effet démultiplicateur.

2. Dispositif selon la revendication 1, **caractérisé en ce que** le réducteur (30) à engrenages droits est à plusieurs rapports, en particulier à deux rapports.

3. Agencement selon la revendication 1 ou 2, **caractérisé en ce que** les engrenages (31, 33, 37, 40) du réducteur qui sont en prise par paires sont agencés dans des plans parallèles au plan de rotor.

4. Agencement selon l'une quelconque des revendications précédentes, **caractérisé en ce que** les dentures d'au moins une paire d'engrenages (31, 33) (37, 40) qui sont engrenés sont hélicoïdales, et que, de préférence, toutes les dentures sont hélicoïdales.

5. Agencement selon l'une quelconque des revendications précédentes, **caractérisé en ce que** le rendement du motoréducteur est de 75%, de préférence 85%.

6. Agencement selon la revendication 2, **caractérisé en ce que** le dispositif communique à l'arbre (4) un couple = 50 Nm, de préférence = 65 Nm, de préférence jusqu'à 75 Nm pour une alimentation de moteur de 75 A sous une tension de 12V.

7. Agencement selon l'une quelconque des revendications précédentes, **caractérisé en ce que** les éléments mobiles à rotation comme l'arbre (4), le rotor (13), les engrenages (31, 33, 37, 40) du réducteur sont montés sur des paliers roulants.

8. Agencement selon l'une quelconque des revendications précédentes **caractérisé en ce qu'**une plaque porteuse (20), qui comporte une ouverture à travers laquelle passe l'arbre (4) avec le pignon (31), est agencée entre le moteur (10) et le réducteur (30), la plaque porteuse comportant des moyens de fixation (41, 42) sur le châssis de véhicule.

9. Agencement selon la revendication 8, **caractérisé en ce que** l'ouverture de passage de l'arbre dans la plaque porteuse (20) consiste en un bloc tubulaire (21) de support de paliers pour recevoir les paliers (16, 39) pour le premier pignon denté (31).

10. Dispositif selon la revendication 9, **caractérisé en ce que** le bloc tubulaire (21) de support de paliers comporte une ouverture traversante latérale (22) pour un premier engrenage (33) qui est engrené avec le premier pignon (31).

11. Dispositif selon l'une quelconque des revendications précédentes, **caractérisé en ce qu'**il comprend des moyens de commutation électronique du moteur (10) et **en ce que** le rotor discoïdal (13) reçoit des aimants permanents (14), de préférence du type en matières des terres rares, comme du cobalt samarium, en particulier du néodyme.

12. Agencement selon l'une quelconque des revendications précédentes, **caractérisé en ce que** l'agencement contient un régulateur électronique pour exciter le moteur (10).

13. Agencement selon la revendication 12, **caractérisé en ce qu'**il inclut des moyens de mesure de couple montés sur l'arbre (4) comme une jauge d'allongement ou DMS selon les initiales du terme allemand Dehnungsmessstreifen, de préférence un dispositif à section en torsades intégré dans l'arbre (4) pour mesurer le couple sur le côté volant (2).

14. Agencement selon la revendication 13, **caractérisé en ce que** le régulateur électronique est connecté aux moyens de mesure du couple de volant.

15. Agencement selon l'une quelconque des revendications précédentes **caractérisé en ce que** le dispositif réducteur (30) est entouré par un carter d'étanchéité (20, 41) et peut de préférence recevoir un liquide, en particulier de l'huile.
